# EUROPÄISCHE PATENTANMELDUNG

(11) **EP 1 703 300 A1**
(43) Veröffentlichungstag der Anmeldung: **20.09.2006**
(21) Anmeldenummer: 05102098.0
(22) Anmeldetag: 17.03.2005
(51) Int. Cl.: G01S 17/42

(54) **Verfahren und System zur Bestimmung von Position und Orientierung eines Objekts**

(71) Anmelder: Leica Geosystems AG, 9435 Heerbrugg (CH)
(72) Erfinder: Aebischer, Beat, 9435, Heerbrugg (CH); Braunecker, Bernhard, 9445, Rebstein (CH); Kipfer, Peter, 9437, Marbach (CH)
(74) Vertreter: Harmann, Bernd-Günther

(57) **Zusammenfassung**

In einem Lagebestimmungsverfahren zur Bestimmung von Position und Orientierung einer bewegbaren Einheit mit einem Empfänger (3) erfolgt ein Erfassen des Empfängers (3) durch eine Abtasteinheit (2), wobei von der Abtasteinheit (2) wenigstens die Entfernung und eine Richtung zum Empfänger (3) ermittelt werden. Die von der Abtasteinheit emittierte Strahlung wird durch den Empfänger (3) erfasst und die Einfallsrichtung der Strahlung in Bezug auf eine Empfängerachse bestimmt. Aus wenigstens der Entfernung, der Richtung zum Empfänger (3) und der Einfallsrichtung als Lageinformationen werden Position und Orientierung der Einheit abgeleitet und diese gegebenenfalls über die optische Verbindung (OV) gesteuert.

## Beschreibung

Die Erfindung betrifft ein Lagebestimmungsverfahren nach dem Oberbegriff des Anspruchs 1, eine bewegbare Einheit nach dem Oberbegriff des Anspruchs 9, eine Abtasteinheit nach dem Oberbegriff des Anspruchs 17 sowie ein Lagebestimmungssystem und ein Computerprogrammprodukt.

In vielen geodätischen Anwendungen werden Verfahren und Systeme zur Lagebestimmung, d.h. zur Positions- und/oder Orientierungsbestimmung, eines verwendeten Instrumentes verwendet. Von einer mit einem solchen System bestimmten Position aus werden dann meist weitere Messungen durchgeführt, die mit der Position verknüpft sind und zumeist auch die Kenntnis der Orientierung des Messgerätes im Raum benötigen. Grundsätzlich kann dabei auch aus der Positionsbestimmung von zwei oder mehr Punkten auf die Orientierung des Instruments geschlossen werden. Für messtechnische Anwendungen sind zur eindeutigen Festlegung der absoluten Lage im Raum die 6 Freiheitsgrade des handhaltbaren Messgerätes, zumindest aber die Position und damit 3 Freiheitsgrade, zu bestimmen. Die Problemstellung beinhaltet somit die Bestimmung von Position und Orientierung als zwei grundsätzlich getrennt lösbare Aufgaben, die aber für viele Anwendungen verknüpft durchgeführt werden müssen. Im Regelfall werden somit sowohl Position als auch Orientierung eines zumeist handhaltbaren Messgerätes benötigt.

Verfahren und Systeme zum Bestimmen der Lage von Objekten werden dabei in vielerlei Anwendungen benötigt. So werden beispielsweise in geodätischen Anwendungen oft Lageinformationen eines Messgeräts verwendet, z. B. beim Einmessen des Messgeräts in ein Gelände-Koordinatensystem. Von einem solchem Messgerät aus werden dann meist weitere Messungen durchgeführt und mit der Lageinformation verknüpft. Ein anderes Einsatzgebiet ist die automatische Maschinensteuerung, wo die Lage von bewegten Fahrzeugen als Grundlage einer Steuerung bekannt sein muss. Ein Lagebestimmungssystem zum Feststellen der Lage bewegter Objekte wird beispielsweise auch beim Markieren von Sportfeldern benötigt.

Bekannte Verfahren bzw. Systeme zur Positionsbestimmung sind beispielsweise globale Positionsbestimmungssysteme, wie GPS. Mit einem GPS-Empfänger auf einem Objekt kann - ungestörten Satelliten-Empfang vorausgesetzt, was z.B. in Strassenschluchten, Sportstadien, Baugruben oder im Tagebau nicht immer gewährleistet ist - die Position des Objekts bestimmt werden. Zum Feststellen der Orientierung des Objekts wird ein zusätzlicher Orientierungsmesser benötigt. Die Genauigkeit der aus GPS-Signalen ermittelten Positionsdaten ist aber - insbesondere bezüglich der Höhe eines Objekts - beschränkt und für viele Anwendungen ungenügend. Auch sind die Systeme für bewegte Objekte zunehmend ungenau bzw. erfordern einen erhöhten Aufwand in der Messung.

Eine andere, häufig verwendete Methode ist die Positionsbestimmung mit Tachymetern oder Totalstationen. Insbesondere finden sich auch zur Positionsbestimmung bewegter Objekte im Stand der Technik vielerlei Ausführungsformen von solchen Systemen zur automatischen Zielverfolgung und Vermessung bewegter Objekte. Im Regelfall erfolgt hierbei nur eine Positionsbestimmung des sich unabhängig von der Totalstation bewegenden Objekts.

Zur Orientierungsbestimmung des Objekts können weitere Messungen auf dem Objekt, z.B. mit Neigungssensoren und einem Kompass, durchgeführt werden.

Andere Ansätze für lokale Positionierungssysteme beruhen auf passiven Punkten bekannter Position. So ist beispielsweise aus der PCT/EP2004/010571 ein System zur Bestimmung der Aktualposition eines Messgerätes bekannt, bei dem mindestens zwei in einem mit einem Laserstrahl abgetasteten Raumsegment gelegene Referenzpunkte erfasst und hinsichtlich ihrer Entfernung und ihrem Neigungswinkel vermessen werden. Aus den bekannten Positionen dieser detektierbar gestalteten Referenzpunkte und den zugeordneten Entfernungen und Neigungswinkel kann die Aktualposition des Messgerätes abgeleitet werden. Das Erfassen, Verfolgen und Vermessen der Referenzpunkte wird durch das Messgerät automatisiert vorgenommen, wobei das Messgerät und den Referenzpunkten zugeordnete, speziell ausgebildete Elemente ein lokales Positionierungs- und/oder Orientierungsmesssystem bilden. Bei diesem System müssen jedoch die Referenzpunkte aktiv mit einem Laserstrahl abgetastet und beleuchtet werden, so dass die Empfangskomponente im Messgerät sehr komplex ausgelegt werden muss.

Diese Art der Positionsbestimmung setzt Referenzpunkte voraus, die entweder bereitgestellt oder bereits vorhanden sein müssen. Diese Voraussetzung ist jedoch oftmals im freien Gelände - wie z.B. auf Sportfeldern oder -plätzen - nicht gegeben. Das Aufstellen von z.B. Reflektorstäben als Referenzpunkte und der Transport derselben gestaltet das Verfahren aufwendig.

Eine Aufgabe der vorliegenden Erfindung besteht darin, ein Verfahren bzw. ein System zur Bestimmung von Positions- und Orientierungsinformationen bewegbarer Einheiten bereitzustellen, das einen vereinfachten Aufbau und Betrieb erlaubt.

Eine weitere Aufgabe ist die Bereitstellung von baulich vereinfachten Systemkomponenten für ein Lagebestimmungssystem.

Eine weitere Aufgabe ist die automatisierte Führung von bewegbaren Einheiten entlang vorgegebener Trajektorien.

Diese Aufgaben werden erfindungsgemäss durch die Gegenstände der Ansprüche 1, 9, 17 oder 19 bzw. der abhängigen Ansprüche gelöst oder die Lösungen weitergebildet.

Die Erfindung betrifft ein Lagebestimmungsverfahren, eine bewegbare Einheit, eine Abtasteinheit sowie ein Lagebestimmungssystem mit diesen Komponenten. Dabei basiert der Ansatz auf der Positionsbestimmung einer bewegbaren Einheit durch ein abtastendes System, z.B. einen Laserscanner. Die Orientierungsbestimmung der Einheit erfolgt durch eine Messung der Lage eines auf der Einheit angeordneten Empfängers relativ zur Strahlachse der von der Abtasteinheit emittierten Strahlung. Aus der Kenntnis der Lage des Empfängers zur Strahlachse und der Kenntnis der Lage des Empfängers relativ zu einer Trägerkomponente der Einheit kann die Orientierung der Einheit abgeleitet werden. Aus der Positions- und der Orientierungsinformation folgt damit die Kenntnis der Lage im Raum.

Zur Bestimmung der Lage der bewegbaren Einheit wird in einem ersten Schritt eine Abtasteinheit, vorzugsweise ein Laser-Scanner, an einem für eine Messung zur Einheit geeigneten Standort positioniert, wobei dieser Standort bekannt sein kann oder vorgängig vermessen wird, so dass die Position der Abtasteinheit bestimmt ist. Eine Vermessung der Position der Abtasteinheit kann mit allgemein bekannten Verfahren der Vermessungstechnik erfolgen, so z.B. mittels einem Total Positioning System oder einem globalen Positionierungssystem. Ebenso kann die Abtasteinheit aber auch relativ zu einem vorgegebenen Ausgangspunkt platziert und vermessen werden. Eine Messung vermittels der Abtasteinheit erfolgt damit von einer Position bekannter lokaler oder globaler Ortskoordinaten aus.

Die Abtasteinheit verfügt über wenigstens eine Strahlungsquelle zur Emission eines Laserstrahls oder Laserpulses, mit welchem Laserstrahl in bekannter Art und Weise ein Raumwinkelbereich abgetastet wird. Je nach konkret gewählter Realisierung einer Ausführungsform können verschiedene - im Stand der Technik bekannte - Abtastbewegungen für das Raumsegment gewählt werden.

Im erfassten Raumsegment befindliche Messziele reflektieren die abtastende Strahlung teilweise zur Abtasteinheit zurück, von welcher die reflektierte Strahlung empfangen und - bezüglich der Entfernung zum Messziel und des Horizontal- und/oder Vertikalwinkels zwischen einer Achse der Abtasteinheit und dem Messziel - ausgewertet wird. Die Messziele sind dabei zumeist anhand ihres Reflexionsvermögens vom Hintergrund unterscheidbar, so dass sie bereits aus der Schwankung in der Intensität der reflektierten Strahlung erkannt werden. Ergänzend können auch weitere Massnahmen zur Zielerkennung oder zur automatisierten Vermessung Verwendung finden. Zu einem beim Abtasten des Raumwinkelbereichs detektierten Messziel wird vermittels der Abtasteinheit über die vom Messziel reflektierte Strahlung, vorzugsweise nach dem Phasenmessprinzip oder dem Prinzip der Pulslaufzeitmessung, die Entfernung gemessen. Zusammen mit der Winkelinformation der emittierten Strahlung, lässt sich dann die Raumposition der jeweiligen Auftreffortes im Verhältnis zur Abtasteinheit bestimmen.

Die zu bestimmenden Winkel hängen hierbei von der konkreten Situation und den vorgegebenen Zwangsbedingungen ab. Erfolgt die Messung beispielsweise nur in einer Ebene, so genügt die Bestimmung des in dieser Ebene liegenden Winkels oder Winkelanteils. Im allgemeinen Fall werden für eine Positionsbestimmung jedoch eine Entfernung und zwei Winkel benötigt.

Die Positionsinformation über ein Objekt als Messziel bzw. ein mit einem reflektiven Messziel ausgestattetes Objekt wird also erhalten, indem ein Laserstrahl einen Raumbereich überstreicht und im Raumbereich gelegene Messziele vermittels der Abtasteinheit erfasst, identifiziert und vermessen werden. Empfängt die Abtasteinheit beim Scannen eines Raumsegments keinen einem Messziel zuordenbaren Strahlungsreflex, so wird ein nächstes Raumsegment gescannt. Diese Zielsuche kann z.B. über eine automatische Zielsucheinrichtung erfolgen.

Die Abtasteinheit kann ein oder mehrere Messziele erfassen, erfindungsgemäss ist das Messziel der Abtasteinheit ein Empfänger, bzw. eine bewegbare Einheit - ein Objekt - mit einem Empfänger, welcher so ausgebildet ist, dass er einerseits einen von der Abtasteinheit emittierten Laserstrahl empfängt und - zumindest teilweise - zurückreflektiert, und andererseits seine Orientierung relativ zum Laserstrahl, bzw. relativ zur Einfallsrichtung des Laserstrahls, bestimmt. Dies kann auf unterschiedliche Art und Weise erfolgen.

Beispielsweise kann der Empfänger eine Empfangsoptik, einen optischen Sensor und einen Neigungssensor umfassen, wobei die Empfangsoptik vorzugsweise sowohl zum Empfangen als auch Reflektieren eines Laserstrahls ausgebildet ist - beispielsweise mittels einer Objektivlinse mit spezieller Beschichtung. Der scannende Laserstrahl trifft auf die Empfangsoptik und wird auf den optischen Sensor, z.B. einen Photodetektor oder ein CCD-Array, abgebildet. Anhand der Abbildung auf dem Sensor wird die Einfallsrichtung des Laserstrahls in Bezug zum Sensor - und damit zum Empfänger bzw. zu einer Empfängerachse bestimmt. Mit der Bestimmung der Einfallsrichtung des Laserstrahls relativ zu einer Empfängerachse ist mindestens ein erster Winkel zwischen Abtasteinheit und Empfänger festgelegt, zumeist sind durch eine entsprechende Auslegung des Empfängers aber zwei Winkel bestimmbar. Der fehlende dritte Neigungswinkel ist beispielsweise mittels des Neigungssensors messbar, wobei ein biaxialer Neigungsmesser redundante Information bereitstellt. Diese mit der Positionsinformation der Abtasteinheit verknüpfte Neigungsinformation kann als Lageinformation bezüglich des Empfängers betrachtet werden. Die Lage des Empfängers ist dann z.B. feststellbar, indem die Lageinformation an eine Recheneinheit kommuniziert, und von dieser verarbeitet wird. Die Kommunikation kann z.B. anhand einer Verbindung über Kabel, oder einer kabellosen Verbindung, z.B. einer Funk-, oder Ultraschall-Übertragung, erfolgen. Anhand der Positions- und Orientierungsinformation wird mittels der Recheneinheit die Lage des Empfängers bzw. eines mit demselben in definierter geometrischer Beziehung stehenden Objekts, z.B. eines Fahrzeugs als bewegbarer Einheit, bestimmt. Ein Notebook mit entsprechender Software kann z.B. eine solche Recheneinheit darstellen, die extern mit der Abtasteinheit und dem Empfänger kommunizieren oder beispielsweise in die Abtasteinheit oder den Empfänger integriert sein kann.

In der Ausbildung mit Empfangsoptik, optischem Sensor und Neigungssensor bzw. Neigungsindikator als Komponenten ist der Empfänger vorzugsweise als handliches Gerät mit die einzelnen Komponenten enthaltendem Gehäuse ausgebildet. Die Komponenten können aber ebenso als separate Teile den Empfänger bilden. Einen Neigungsindikator kann z.B. auch ein der Optik zugeordneter Polarisationsfilter darstellen, so dass eine Lagebestimmung relativ zur Polarisationsrichtung der emittierten Strahlung erfolgt.

Ein alternativ ausgebildeter Empfänger sieht ein zusätzliches reflektives Element zur verbesserten Vermessung durch die Abtasteinheit vor, sodass die Positionsinformation über eine Messung zu diesem reflektiven Element erhalten wird. Das reflektive Element kann z.B. ein auf der Empfangsoptik selbst oder deren Gehäuse angebrachter Reflektor - z.B. Tripelprismen oder sphärische Reflektoren, bzw. einfach ein reflektiver Bereich - z.B. aus reflektierender Folie - auf dem Gehäuse oder in definierter Art und Weise mit der- oder demselben verbunden sein.

Die Empfangsoptik des Empfängers ist vorzugsweise um wenigstens eine feste Achse, im Allgemeinen eine auf die optische Achse der Empfangsoptik orthogonale, insbesondere vertikale Achse, rotierbar, d.h. sie kann sich in Richtung der Abtasteinheit ausrichten bzw. ausgerichtet werden. Der Winkel, um den sich die Empfangoptik dreht oder gedreht wird (der Rotationswinkel), wird dabei, vorzugsweise automatisch - z.B. durch einen Winkelsensor, bestimmt.

Die Anordnung des erfindungsgemässen Lagebestimmungssystems mit Abtasteinheit, Empfänger und Steuereinheit ist vorzugsweise derart gewählt, dass die Rotationsachse der Empfangsoptik vertikal und der scannende Laserstrahl der Abtasteinheit horizontal in Bezug auf eine Referenzebene, z.B. einen Untergrund, sind. Vorzugsweise richtet sich nach einer ersten Justierung die Empfangsoptik automatisch gegen die Abtasteinheit aus. Die Zielsuche der Abtasteinheit verläuft vorzugsweise ebenfalls automatisch. Beispielsweise kann auch ein Grobsuchlauf zur Erfassung der Empfangsoptik verwendet werden, der eine zur Erfassung der Empfangsoptik geeignete Komponente der Abtasteinheit ausrichtet, so dass keine Interaktion mit einem Benutzer erforderlich ist.

Die Recheneinheit kann als externe Komponente des Systems z.B. von einem Benutzer bedient werden. Ebenso sind aber Ausführungsformen mit in die Abtasteinheit oder den Empfänger integrierter Recheneinheit möglich. Das System wird dann z.B. automatisch von der Abtasteinheit oder dem Empfänger aus gesteuert.

Eine erfindungsgemässer Empfänger wird im Allgemeinen in definierter Weise mit einer bewegbaren Einheit mittel- oder unmittelbar verbunden und somit die Lage der Einheit bestimmbar gestaltet.

So wird das erfindungsgemässe Lagebestimmungssystem z.B. zur Vermessung einer bewegten Einheit eingesetzt und die Lage der bewegten Einheit zu jedem Zeitpunkt festgestellt. Die Abtasteinheit wird - wie bereits beschrieben - an bekannten Koordinaten positioniert und der Empfänger der zu vermessenden Einheit zugeordnet, vorzugsweise darauf angebracht.

Die zu vermessende Einheit kann beispielsweise eine Baumaschine sein. Es kann auch ein Vermessungsinstrument sein, dessen Position und Orientierung bestimmt werden soll. Ein weiteres Einsatzgebiet liegt in der Anwendung für alle Arten von Markierungsarbeiten. Das können sowohl Markierungen für Bauarbeiten sein, als auch auf Sportplätzen. Dafür wird die erfindungsgemässe Empfangsvorrichtung z.B. auf einem fahrbaren Markierungsgerät zum Zeichnen oder Sprühen von Linien oder zweidimensionalen Zeichnungen, wie Wappen, Symbolen oder Texten, angebracht.

Ein Empfänger als Komponente des erfindungsgemässen Lagebestimmungssystems kann auch weitere Messfunktionalitäten aufweisen, die z.B. eine Verwendung als geodätisches Instrument erlauben oder aber in ein solches Gerät integriert sind. Beispielsweise kann der Empfänger zur handgehaltenen Vermessung im Baubereich verwendbar gestaltet werden, indem ein Laserentfernungsmesser integriert wird.

Durch die Orientierungsbestimmung relativ zur Strahlachse kann der Empfänger bzw. die bewegbare Einheit gesteuert werden, indem die Strahlung mit ihrer Emissionsachse gleichsam als Leitstrahl bewegt wird. Hierzu wird die Steuereinheit so programmiert oder hardwareseitig ausgelegt, dass die Ablage der Empfängerachse von der Emissionsachse konstant gehalten oder verringert bzw. minimiert wird. Somit resultiert jede Veränderung des Leitstrahls in einer Korrektur der Lage des Empfängers bzw. der bewegbaren Einheit. In einer kontinuierlichen Abfolge solcher Korrekturen folgt die bewegbare Einheit dem bewegten Leitstrahl.

Durch die Führung des Leitstrahls gemäss einem vorgegebenen Muster kann die Einheit zielgenau bewegt werden, so dass beispielsweise mit Bearbeitungskomponenten die Oberfläche verändert werden kann. So können beispielsweise beliebig geformte Figuren als Vektorgraphik auf der Erdoberfläche markiert werden. Dies erlaubt beispielsweise die Erstellung von komplexen Vereinszeichen auf Sportfeldern.

Das erfindungsgemässe Lagebestimmungsverfahren und das erfindungsgemässe Lagebestimmungssystem mit den Komponenten werden nachfolgend anhand von in den Zeichnungen schematisch dargestellten Ausführungsbeispielen rein beispielhaft näher beschrieben oder erläutert. Im Einzelnen zeigen
- Fig.1: die dem Lagebestimmungsverfahren zugrundeliegenden geometrischen Beziehungen;
- Fig.2: eine figürliche Darstellung von Ausführungsbeispielen der Systemkomponenten eines erfindungsgemässen Lagebestimmungssystems;
- Fig.3: die schematische Darstellung eines ersten Ausführungsbeispiels eines erfindungsgemässen Lagebestimmungssystems;
- Fig.4: die schematische Darstellung des ersten Ausführungsbeispiels mit bewegter Empfangseinrichtung;
- Fig.5: eine schematische Darstellung eines Ausführungsbeispiels für die Richtungsbestimmung der einfallenden Strahlung im Empfänger einer erfindungsgemässen Einheit und
- Fig.6a-d: eine schematische Darstellung der Steuerung eines Markierwagens unter Verwendung eines erfindungsgemässen Lagebestimmungsverfahrens.

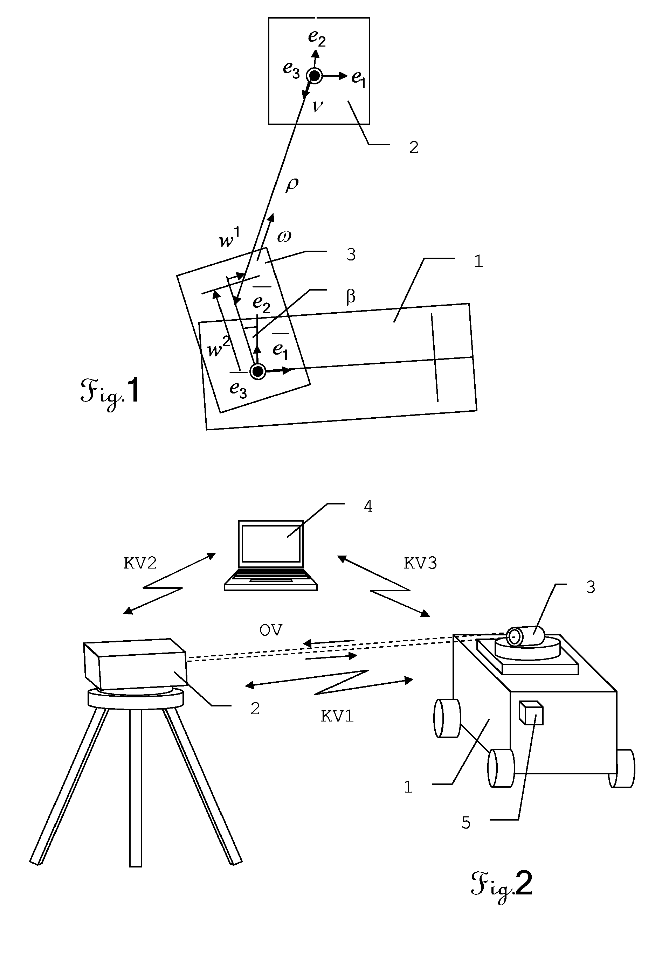

Fig.1 veranschaulicht die dem Lagebestimmungsverfahren zugrundeliegenden geometrischen Beziehungen. Auf einer Trägerkomponente 1 einer bewegbaren Einheit ist ein Empfänger 3 um eine körperfeste Achse drehbar montiert, wobei diese Achse orthogonal zur optischen Achse orientiert ist. Aus Anschaulichkeitsgründen erfolgt die Darstellung in einer Ebene und ohne Neigungen gegenüber der Horizontalen. Im Regelfall wird jedoch auch eine weitere Achse zur vertikalen Verstellung des Empfängers 3 realisiert. Durch die Abtasteinheit 2 wird ein Laserstrahl emittiert und ein Winkelbereich abgetastet, bis der Empfänger 3 erfaßt und dessen Distanz gemessen wird. Hierdurch werden sowohl Entfernung als auch Winkel zum Reflexpunkt am Empfänger 3 festgelegt und somit die Position des Empfängers 3 bestimmt. Durch den Empfänger 3 wird die Einfallsrichtung der Strahlung bestimmt, so dass die Orientierung bezüglich dieser Richtung und damit bezüglich der Abtasteinheit 2 ableitbar ist. Die beiden Systeme Abtasteinheit 2 und Empfänger lassen sich mit den zwei körperfesten rechtshändigen Koordinatensystemen {*e*₁,*e*₂,*e*₃} und {*e̅*₁,*e̅*₂,*e̅*₃} beschreiben, wobei in der beispielhaft gezeigten Situation der jeweils dritte Einheitsvektor senkrecht zur Blattebene orientiert ist.

Die Abtasteinheit 2 misst nun die Distanz ρ>0 und den ersten Richtungsvektor ν∈**R**³,∥ν∥=1. Der Empfänger misst den Rotationswinkel β gegenüber der Trägerkomponente 1 der bewegbaren Einheit, sowie den zweiten Richtungsvektor ω∈**R**³,∥ω∥=1, Zudem sind die Koordinaten *w*¹, *w*² des Verschiebungsvektors *w* bekannt bzw. werden gemessen, z.B. bei einer Kalibrierung. Die in dieser Figur nicht dargestellte Komponente *w*³ steht senkrecht zur Blattebene. Aus der Kenntnis dieser Parameter kann die Lage eines ausgezeichneten Punktes der bewegbaren Einheit bzw. deren Trägerkomponente 1 bestimmt werden. Gleichermassen erlaubt die Kenntnis eine Steuerung von Empfänger 3 und Einheit so, dass dieser ausgezeichnete Punkt bezüglich des ersten Richtungsvektors *ν* als Strahlachse der emittierten Strahlung positioniert bzw. orientiert wird. Somit kann durch diese Steuerung ein die Strahlachse verfolgendes System realisiert werden.

Fig.2 zeigt eine figürliche Darstellung von Ausführungsbeispielen der Systemkomponenten eines erfindungsgemässen Lagebestimmungssystems. Die bewegbare Einheit weist eine Trägerkomponente 1 und einen gegenüber dieser rotierbaren Empfänger 3 auf, wobei in den Empfänger 3 oder die Trägerkomponente 1 auch ein Neigungsmesser 5 integriert sein kann. Der Empfänger 3 oder eine seiner Bestandteile wird von der Abtasteinheit 2 erfasst und vermessen. Während des Verfahrensablaufs stehen Empfänger 3 und Abtasteinheit 2 über eine optische Verbindung OV in Kontakt. Über diese Verbindung OV erfolgt ständig die Positionsbestimmung des Empfängers 3 sowie dessen Orientierungsbestimmung relativ zur Verbindung OV und damit auch zur Abtasteinheit 2. Die Lageinformationen Entfernung, Richtung zum Empfänger 3 und Einfallsrichtung können entweder im Empfänger 3 oder in der Abtasteinheit 2 hinsichtlich der Positions- und Orientierungsbestimmung in einer integrierten Steuereinheit ausgewertet werden. Hierzu können die jeweils an der anderen Systemkomponente anfallenden Daten über eine Kommunikationsverbindung KV1 zwischen Empfänger 3 und Abtasteinheit 2 übertragen werden. Für bestimmte Anwendungen kann auch eine getrennte Steuereinheit 4 verwendet werden, so dass hierbei die jeweiligen Anteile der Lageinformationen über eine Kommunikationsverbindung KV2 zwischen Abtasteinheit 2 und Steuereinheit 4 sowie über eine Kommunikationsverbindung KV3 zwischen Empfänger 3 und Steuereinheit 4 übertragen werden. Durch die Steuereinheit 4 und die Kommunikationsverbindungen können dann wiederum Empfänger 3 und Abtasteinheit 2 gesteuert werden.

Unter Richtungen sind je nach vorhandenen Gegebenheiten und Zwangsbedingungen jeweils ein oder mehrere Winkel bzw. deren Bestimmung zu verstehen. In einer exakten Ebene, bspw. auf einem Sportfeld aus Kunststoffmaterial, werden die vorhandenen Freiheitsgrade durch die Zwangsbedingung einer Orientierung und Positionierung in dieser Ebene vorgegeben. Die zur Bestimmung von Position und Orientierung benötigte Zahl an Messgrössen wird somit reduziert. Wird beispielsweise ein Fahrzeug mit einer hinreichend grossen horizontalen Ausdehnung als Trägerkomponente 1 verwendet, so ist dieser stets horizontiert. Eine Neigungsmessung in zwei Achsen ist somit nicht nötig. Der Begriff Richtungsbestimmung beinhaltet je nach Umweltbedingungen die Messung der notwendigen Zahl von Grössen. Für ein Fahrzeug in der Ebene genügen dann Entfernung, Richtung zum Fahrzeug, d.h. der Polarwinkel, und Empfangsrichtung, d.h. ebenfalls der Polarwinkel der empfangenen Strahlung, um Position und Orientierung zu bestimmen. Darüber hinaus wird durch die Zwangsbedingungen auch die Orientierung des Empfängers 3 relativ zur Trägerkomponente 1 festgelegt. In obigem Beispiel genügt eine Bewegbarkeit des Empfängers 3 gegenüber der Trägerkomponente 1 um eine Stehachse, so dass auch hier ein Polarwinkel zur Definition von Position und Orientierung der Trägerkomponente 1 relativ zum Empfänger 3 ausreicht.

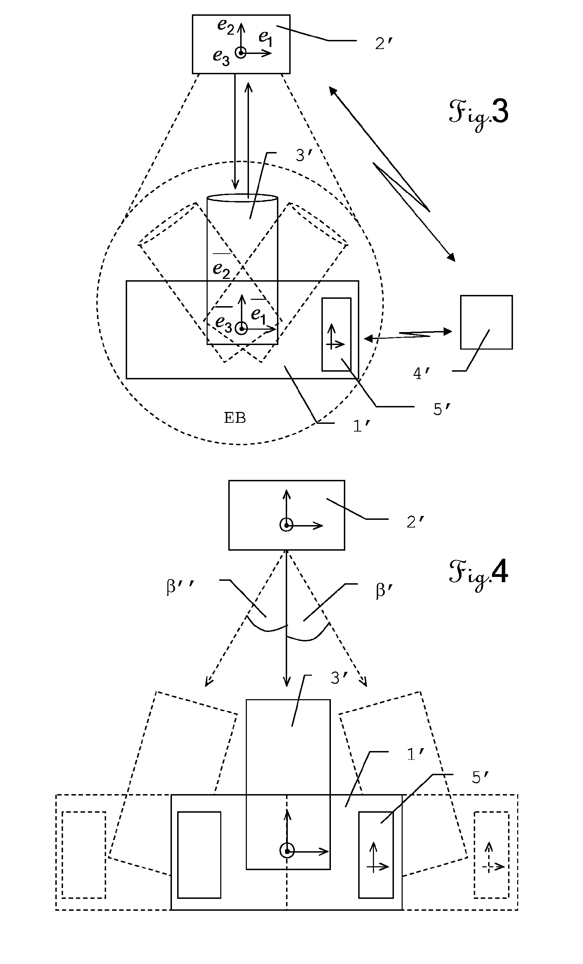

In Fig.3 wird ein erstes Ausführungsbeispiel eines erfindungsgemässen Lagebestimmungssystems erläutert. Der Laser-Scanner in der Abtasteinheit 2' emittiert Strahlung, z.B. Laser-Pulse, und wird mit der nicht dargestellten Steuereinrichtung derart gesteuert, dass eine Ausrichtung des Scanners auf den Empfänger 3' erfolgt. Mit gestrichelten Linien ist ein Erfassungsbereich EB dargestellt, welcher vom Scanner abgetastet wird. Ein vom Scanner emittierter Laserstrahl trifft die mit einem für die emittierte Strahlung gut reflektierenden Belag beschichtete Objektivlinse des Empfängers 3' und auf eine nicht gezeigte Detektionseinrichtung des Laser-Scanners zurückgeworfen. Dem körperfesten Koordinatensystem {*e*₁,*e*₂,*e*₃} der Abtasteinheit 2' können bekannte lokale oder globale Koordinaten zugeordnet werden. Der Laser-Scanner ist derart in das Koordinatensystem einjustiert, dass der Drehpunkt des Lasers im Koordinatenursprung liegt. Von dieser Position bekannter Ortskoordinaten aus wird die Messung auf den Empfänger 3' durchgeführt. Der Scanner ist dabei um die Kipp- und Stehachse drehbar, wobei die Emissionsrichtung des emittierten Laserstrahls, z.B. anhand von Winkelsensoren, automatisch detektiert wird.

Die Trägerkomponente 1' weist einen rotierbaren Empfänger 3' und einen zweiachsigen Neigungssensor 5' auf. Der Ursprung des körperfesten Koordinatensystems {e̅₁,e̅₂,e̅₃} ist in den Drehpunkt des Empfängers 3' gelegt, welcher zumindest um die aus der Zeichenebene heraus zeigende Achse rotierbar ist. Durch die Messung auf die Empfangsoptik des Empfängers 3' wird dessen Koordinatensystem {e̅₁,e̅₂,e̅₃} mit demjenigen der Abtasteinheit 2' in Bezug gesetzt. Die Messung vom Laser-Scanner auf den Empfänger 3' erfolgt beispielsweise auf dessen Objektivlinse. Einerseits wird von der Objektivlinse ein Laserstrahl empfangen und Einfallsrichtung und -punkt desselben bestimmt, andererseits wird der Laserstrahl von der Objektivlinse der zu einer nicht gezeigten Detektionseinrichtung des Scanners zurückreflektiert, welche den Abstand zwischen Abtasteinheit 2' und Empfänger 3' bestimmt. Aufgrund der bekannten Geometrie des Empfängers 3' ist damit auch der Abstand zur Trägerkomponente 1' bzw. zu jedem Punkt der bewegbaren Einheit bestimmt.

Der Rotationswinkel des drehbaren Empfängers 3' wird automatisch, z.B. mit Winkelsensoren, bestimmt bzw. zur Verfolgung des Leitstrahls aktiv eingerichtet. Selbstverständlich kann der Empfänger 3' auch derart ausgebildet sein, dass er um weitere Achsen dreh- oder kippbar ist. Die vom Empfänger 3' und der Abtasteinheit 2' gemessenen Werte können an eine externe Steuereinheit 4' übertragen werden.

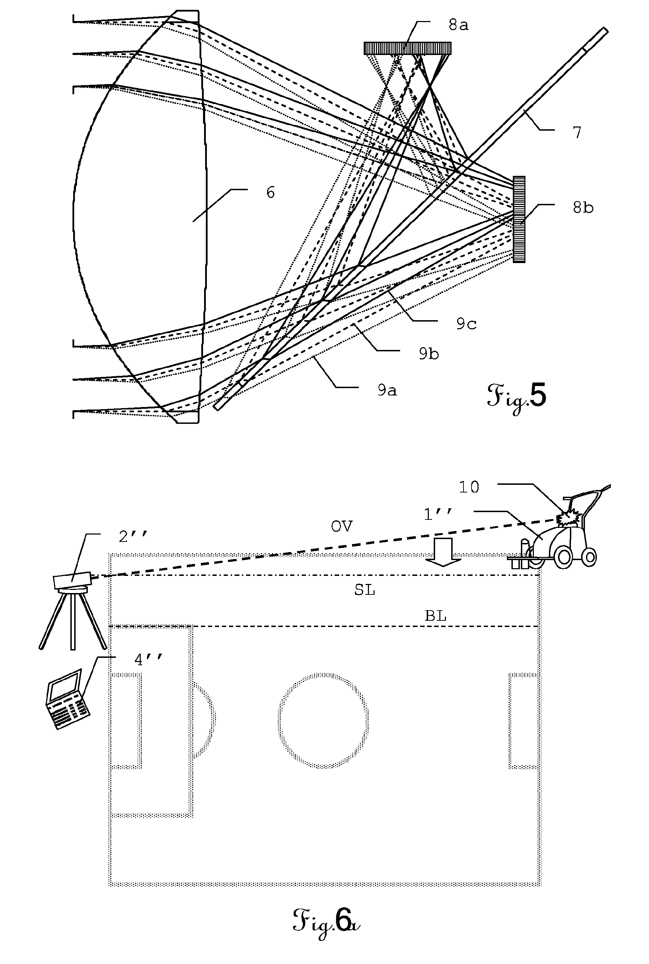

Fig.4 zeigt die schematische Darstellung des ersten Ausführungsbeispiels mit bewegter Empfangseinrichtung. Analog zur Beschreibung zu Fig.3 findet von der Abtasteinheit 2' aus eine Distanz- und Richtungsmessung zum Empfänger 3' statt. Die in der Mitte dargestellte Situation zeigt einen Emissionswinkel von 0°, der linke und rechte Strahl wird jeweils in einem gewissen Emissionswinkel β', β'' zur 0°-Richtung emittiert. Wird nun nach der in Fig.3 dargestellten Erfassung und Vermessung des Empfängers 3' der Laserstrahl um den Winkel β' geschwenkt, so bewegt sich die Trägerkomponente 1' mit dem darauf angebrachten Empfänger 3' ebenfalls nach rechts, um die vorher bestehende Beziehung zwischen Empfängerachse und Laserstrahl aufrecht zu erhalten. Soll dabei die Distanz gleich gehalten werden, so erfolgt eine Bewegung auf einem Kreisbogen. Die hier gezeigte lineare Verschiebung nach rechts bedeutet eine mit zunehmender Verschiebung anwachsende Entfernung zwischen Abtasteinheit 2' und Empfänger 3'. Die gleichen Überlegungen gelten mutatis mutandis für die ebenfalls dargestellte Bewegung um den Winkel β'' bzw. nach links. Je nach vorgegebenem Sollprofil bzw. zu durchfahrender Trajektorie werden auf der Basis der durch Abtasteinheit 2' und Empfänger 3' fortlaufend erzeugten Lageinformationen die notwendigen Steuerbefehle generiert. Durch die kontinuierliche Vermessung der Position des Empfängers 3' und dessen Anbindung an die Strahlrichtung der Emission kann eine Führung im Sinne eines "Reitens auf dem Leitstrahl" erreicht werden.

Eine schematische Darstellung eines Ausführungsbeispiels für die Richtungsbestimmung der einfallenden Strahlung im Empfänger einer erfindungsgemässen Einheit erfolgt in Fig.5. In diesem Ausführungsbeispiel wird eine asphärische Linse 6 mit einer Apertur von 60 mm, einem Strahlteiler 7 und zwei ortssensitiven photoempfindlichen Detektorkomponenten 8a und 8b verwendet. Als geeignete Detektoren kommen beispielsweise Zeilenarrays, CCD- oder CMOS-Kameras oder Position Sensitive Devices (PSD) in Frage. In der Fig.5 entspricht die gestrichelte Linie 9b einem achsparallelen Strahleinfall, der zu einer Abbildung in der Mitte der Detektorenfläche führt. Ein mit durchgezogener Linie 9a angedeuteter Versatz nach unten führt zu einer Verschiebung der Abbildung in der Detektorfläche nach oben bzw. nach rechts. Ein mit gepunkteter Linie 9a dargestellter Versatz nach oben führt zu einer Verschiebung nach unten bzw. links.

Beide Detektorkomponenten 8a und 8b werden in diesem Ausführungsbeispiel in unterschiedlicher Richtung defokussiert. Beispielsweise befindet sich die Detektorkomponente 8a ausserhalb der Brennweite und die Detektorkomponente 8b innerhalb der Brennweite der Linse 6. Erfindungsgemäss kann durch diese Anordnung sowohl die Einfallsrichtung, als auch die Positionsverschiebung, d.h. die Koordinaten *w*¹, *w*³ des Verschiebungsvektors w in Fig.1, des einfallenden Strahls gemessen werden. Betrachtet man nur eine Koordinate auf den beiden Detektoren, so zeigt sich eine Änderung der Einfallsrichtung in einem Versatz des Bildpunkts auf beiden Detektorkomponenten 8a und 8b als Änderung der Summe der entsprechenden Detektorkoordinaten, wohingegen eine Positionsverschiebung des Strahls sich in der Änderung der Differenz der Detektorkoordinaten zeigt. Die Verwendung der zwei entgegengesetzt defokussierten Detektorkomponenten 8a und 8b erlaubt somit die Bestimmung von Einfallsrichtung und Positionsverschiebung und damit von vier Parametern.

Soll nur die Einfallsrichtung bestimmt werden, so genügt die Verwendung einer Detektorkomponente in der Fokusebene zur Bestimmung der Einfallsrichtung und damit von zwei Parametern. Durch eine solche Ausgestaltung der Empfängeroptik bzw. Empfängerelektronik kann die Richtung der einfallenden Strahlung sowie ein Positionsversatz einfach detektiert und gegebenenfalls die Empfängerachse nachgeführt werden.

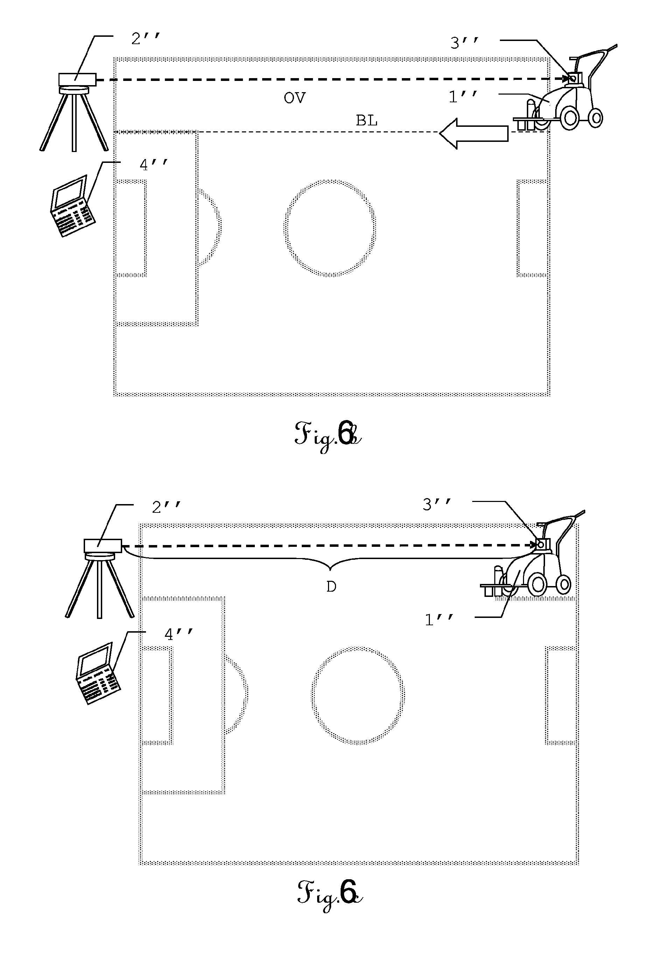

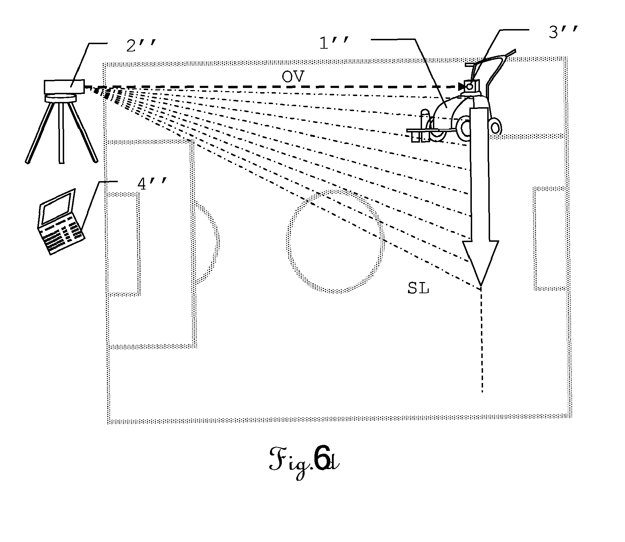

Fig.6a-d zeigen eine schematische Darstellung des Steuerung eines Markierwagens 1" als Trägerkomponente unter Verwendung eines erfindungsgemässen Lagebestimmungsverfahrens. Dargestellt wird eine Situation, bei der ein Sportfeld mit Markierungen versehen werden soll. In Fig.6a wird der Markierwagen 1'' durch die suchende Bewegung der Abtasteinheit 2'' anhand eines Reflexes 10 an der Empfangsoptik identifiziert und in Richtung und Entfernung vermessen. Dabei erfolgt die Vorgabe der zu markierenden Linie über eine von einem Bearbeiter zu bedienende, abgesetzt positionierte Steuereinheit 4" . Der Markierwagen 1" ist über die optische Verbindung OV mit der Emission der Abtasteinheit 2'' gekoppelt. Zur Markierung einer Bearbeitungslinie BL, die eine Seite des Strafraums festlegt, muss der Markierwagen 1'' mit seiner Empfängerachse zu einer Sollinie SL geführt werden. Diese ist in diesem Beispiel nicht mit der Bearbeitungslinie BL deckungsgleich, da aufgrund des räumlichen Abstands zwischen Bearbeitungselementen und der Empfängerachse ein Versatz erforderlich ist, um die Markierung korrekt aufzubringen. Die Elektronik des Markierwagens 1" steuert diesen nun so, dass bei für die zu erreichende Position vorgegebener Distanz die Empfängerachse mit der Achse der emittierten Strahlung, d.h. der optischen Verbindung OV, zur Deckung gebracht oder innerhalb einer vorgegebenen Abweichung gehalten wird. Durch die Veränderung der optischen Verbindung OV kann somit der Markierwagen 1'' mit der Empfängerachse auf die Sollinie SL geführt werden, so dass eine Aufbringung der Markierung möglich ist.

Die Übereinstimmung von optischer Verbindung OV, Empfängerachse und Sollinie SL ist in Fig.6b dargestellt. Der Empfänger 3" ist mit seiner Empfängerachse direkt auf die Strahlachse der Emission der Abtasteinheit 2'' ausgerichtet. In diesem speziellen Fall bleibt die Ausrichtung der Empfängerachse gleich und der Markierwagen 1" bewegt sich, wie in Fig.6c dargestellt, zur Erzeugung der Markierung direkt auf die Abtasteinheit 2" zu, so dass sich nur die Entfernung D fortlaufend verringert. Andere räumliche Anordnungen bedingen eine parallele Änderung von Richtung des Empfängers 3" und der Entfernung D.

Ein solcher Fall ist in Fig.6d schematisch dargestellt. Nachdem der Markierwagen 1'' die Strafraumseite markiert hat, soll dieser eine sich anschliessende und rechtwinklig dazu verlaufende Linie markieren. Dazu wird von der Abtasteinheit die Sollinie SL kontinuierlich verändert so dass der Markierwagen 1'' dieser Veränderung folgt, indem er versucht, die optische Verbindung OV aufrecht zu erhalten. Zudem wird zur korrekten Aufbringung der Markierung auch die Stellung des Empfängers 3" relativ zum Markierwagen 1'' berücksichtigt, da die Ausbringungseinheit als ausgezeichneter Punkt zu positionieren ist. Bei diesen geometrischen Bedingungen variieren sowohl der Winkel zwischen Empfänger 3'' und Markierwagen 1'' als auch die Entfernung kontinuierlich.

## Patentansprüche

1. Lagebestimmungsverfahren zur Bestimmung von Position und Orientierung, insbesondere in einer Ebene, einer bewegbaren Einheit mit einem Empfänger (3,3',3''), mit
• einer Abtasteinheit (2,2',2'') zum abtastenden Erfassen des Empfängers (3,3',3'') durch Emission elektromagnetischer Strahlung, insbesondere von Laserstrahlung, wobei
o die Abtasteinheit (2,2',2'') auf einem Punkt definierter Position positionierbar ist,
o der Empfänger (3,3',3'') zum Empfang der Strahlung, ausgebildet und auf der Einheit anbringbar ist,
mit einem
- Erfassen des Empfängers (3,3',3'') durch die Abtasteinheit (2,2',2"), wobei von der Abtasteinheit (2,2',2") wenigstens die Entfernung, insbesondere nach dem Phasen- oder Laufzeitmesserprinzip, und eine Richtung zum Empfänger (3,3',3'') ermittelt werden,
- Erfassen der Strahlung durch den Empfänger (3,3',3'') und Bestimmung einer Einfallsrichtung der Strahlung in Bezug auf eine Empfängerachse,
- Bestimmen der Position und Orientierung der Einheit aus wenigstens der Entfernung, der Richtung zum Empfänger (3,3',3'') und der Einfallsrichtung als Lageinformationen.

2. Lagebestimmungsverfahren nach Anspruch 1,
**dadurch gekennzeichnet, dass**
die Richtung zum Empfänger (3,3',3'') mit einem horizontalen Empfängerwinkel und einem vertikalen Empfängerwinkel bestimmt wird.

3. Lagebestimmungsverfahren nach Anspruch 1 oder 2,
**dadurch gekennzeichnet, dass**
die Einfallsrichtung mit einem horizontalen Einfallswinkel bestimmt wird, insbesondere auch mit einem vertikalen Einfallswinkel, so dass die Orientierung des Empfängers (3,3',3'') relativ zur Einfallsrichtung ableitbar ist.

4. Lagebestimmungsverfahren nach einem der vorangehenden Ansprüche,
**dadurch gekennzeichnet, dass**
eine Bestimmung der Stellung des Empfängers (3,3',3'') relativ zur Einheit erfolgt.

5. Lagebestimmungsverfahren nach einem der vorangehenden Ansprüche,
**dadurch gekennzeichnet, dass**
beim Bestimmen der Position und Orientierung der Einheit eine Neigungsmessung erfolgt.

6. Lagebestimmungsverfahren nach einem der vorangehenden Ansprüche,
**dadurch gekennzeichnet, dass**
die Strahlung mit einer Polarisationsrichtung emittiert und vom Empfänger die Polarisationsrichtung detektiert wird, so dass die Lage des Empfängers (3,3',3'') relativ zur Polarisationsrichtung ableitbar ist.

7. Lagebestimmungsverfahren nach einem der vorangehenden Ansprüche,
**dadurch gekennzeichnet, dass**
eine Lageveränderung des Empfängers (3,3',3'') und/oder der Einheit so gesteuert wird, dass eine vorgegebene Ausrichtung relativ zur Einfallsrichtung eingenommen wird, insbesondere dass die Position und Orientierung der Einheit durch ein Verfolgen der Einfallsrichtung als Leitstrahl kontinuierlich verändert wird.

8. Lagebestimmungsverfahren nach einem der vorangehenden Ansprüche,
**gekennzeichnet durch**
eine Übertragung von wenigstens Teilen der Lageinformationen von
- der Abtasteinheit (2,2',2'') an den Empfänger (3,3',3'') und/oder die Einheit,
- dem Empfänger (3,3',3'') und/oder der Einheit an die Abtasteinheit (2,2',2''),
- der Abtasteinheit (2,2',2'') an eine Steuereinheit (4,4',4'') und/oder
- dem Empfänger (3,3',3'') und/oder der Einheit an die Steuereinheit (4,4',4"),
insbesondere über eine
o Funk-,
o Infrarot-,
o Ultraschall- oder
o Kabel-Verbindung.

9. Bewegbare Einheit zur Durchführung eines Lagebestimmungsverfahrens nach einem der vorangehenden Ansprüche, mit
- einer Trägerkomponente (1,1',1''), insbesondere mit einem Antrieb, und
- einem Empfänger (3,3',3'') zum Empfang der Strahlung,
wobei der Empfänger (3,3',3'') gegenüber der Trägerkomponente (1,1',1'') verstellbar, insbesondere um ein oder zwei Achsen verdrehbar, angeordnet ist,
**dadurch gekennzeichnet, dass**
der Empfänger (3,3',3") und die Trägerkomponente (1,1',1") so ausgebildet und angeordnet sind, dass
- die Einfallsrichtung der Strahlung in Bezug auf eine Empfängerachse und
- die Stellung des Empfängers (3,3',3'') relativ zur Trägerkomponente (1,1',1''), insbesondere durch wenigstens einen Winkelsensor,
detektierbar sind.

10. Bewegbare Einheit nach Anspruch 9, mit
**dadurch gekennzeichnet, dass**
der Empfänger (3,3',3'') eine Objektivlinse mit wenigstens einer strahlungsempfindlichen, insbesondere bezüglich der Strahlung positionssensitiven, Detektorkomponente aufweist, wobei die Detektorkomponente in der Fokusebene angeordnet ist.

11. Bewegbare Einheit nach Anspruch 9, mit
**dadurch gekennzeichnet, dass**
der Empfänger (3,3',3'') eine Objektivlinse mit nachgeordnetem Strahlteiler und wenigstens zwei strahlungsempfindliche, insbesondere bezüglich der Strahlung positionssensitive, Detektorkomponenten (8a,8b) aufweist, wobei die Detektorkomponenten (8a,8b) entgegengesetzt defokussiert angeordnet sind.

12. Bewegbare Einheit nach Anspruch 9, 10 oder 11,
**dadurch gekennzeichnet, dass**
der Empfänger (3,3',3") gegenüber der Trägerkomponente (1,1',1'') automatisch verstellbar ist, insbesondere mit einer Steuerung zur Ausrichtung der Empfängerachse bezüglich der Einfallsrichtung der Strahlung.

13. Bewegbare Einheit nach einem der Ansprüche 9 bis 12,
**gekennzeichnet durch**
einen Neigungsmesser (5,5'), insbesondere einen biaxialen Neigungsmesser.

14. Bewegbare Einheit nach einem der Ansprüche 9 bis 13,
**gekennzeichnet durch**
ein die Strahlung reflektierendes Element, insbesondere einen reflektierend ausgebildeten Bereich des Empfängers (3,3',3''), vorzugsweise einen reflektierend ausgebildeten Bereich einer Empfängeroptik.

15. Bewegbare Einheit nach einem der Ansprüche 9 bis 14,
**dadurch gekennzeichnet, dass**
der Empfänger (3,3',3'') polarisationssensitiv ausgebildet ist, so dass die Lage des Empfängers (3,3',3'') relativ zur Polarisationsrichtung ableitbar ist.

16. Bewegbare Einheit nach einem der Ansprüche 9 bis 15,
**gekennzeichnet durch**
eine Bearbeitungseinheit zur Veränderung einer Oberfläche, insbesondere zur Erzeugung bodengebundener Markierungen.

17. Abtasteinheit (2,2',2") zur Durchführung eines Lagebestimmungsverfahrens nach einem der Ansprüche 1 bis 8, mit
- einer Strahlungsquelle zur Emission elektromagnetischer Strahlung, insbesondere von Laserlicht,
- einer Steuerkomponente zum Führen der Strahlung in einer Abtastbewegung über einen Raumwinkelbereich,
- einer Messkomponente zum Empfangen der reflektierten Strahlung und Bestimmen von Richtung und Entfernung zu einem Reflexionsort der Strahlung, insbesondere nach dem Laufzeit- oder Phasenmessprinzip, und
- Kommunikationsmitteln zur Übertragung von Richtung und Entfernung,
**dadurch gekennzeichnet, dass**
die Steuerkomponente so ausgebildet ist, dass die Abtastbewegung einem frei vorgebbaren Muster folgt.

18. Abtasteinheit (2,2',2") nach Anspruch 17,
**dadurch gekennzeichnet, dass**
die Strahlungsquelle zur Emission polarisierter Strahlung ausgebildet ist.

19. Lagebestimmungssystem zur Durchführung eines Lagebestimmungsverfahrens nach einem der Ansprüche 1 bis 8, mit einer bewegbaren Einheit nach einem der Ansprüche 9 bis 16 und einer Abtasteinheit (2,2',2") nach einem der Ansprüche 17 oder 18.

20. Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 8, insbesondere wenn das Programm in einem Computer ausgeführt wird.
